Europäisches Patentamt

European Patent Office

Office européen des brevets

(11) Publication number: **0 215 600**
**B1**

(12) **EUROPEAN PATENT SPECIFICATION**

(45) Date of publication of patent specification: **06.02.91**

(21) Application number: **86306731.0**

(22) Date of filing: **01.09.86**

(51) Int. Cl.⁵: **G 01 N 31/22, G 01 N 33/24**

(54) Improvements in or relating to watering indicators for plants.

(30) Priority: **09.09.85 GB 8522294**

(43) Date of publication of application:
**25.03.87 Bulletin 87/13**

(45) Publication of the grant of the patent:
**06.02.91 Bulletin 91/06**

(84) Designated Contracting States:
**AT BE CH DE FR GB IT LI NL SE**

(56) References cited:
**GB-A-2 059 077**
**US-A-3 019 638**
**US-A-3 824 844**
**US-A-3 951 098**
**US-A-4 201 080**

(73) Proprietor: **CROWTHER DISPLAY LIMITED**
**5 Hawbank Road College Milton North**
**East Kilbride Glasgow G74 5EE (GB)**

(72) Inventor: **Crowther, Albert**
**Birkwood House Waterfoot Road**
**Thorntonhall Glasgow Scotland (GB)**

(74) Representative: **McCallum, William Potter et al**
**Cruikshank & Fairweather 19 Royal Exchange**
**Square**
**Glasgow G1 3AE Scotland (GB)**

Courier Press, Leamington Spa, England.

## Description

This invention relates to a watering indicator for plants. The indicator is intended to be inserted into the soil surrounding a plant in order to indicate the moisture content thereof.

Such indicators have previously been proposed and in particular British Patent No. 2059077 discloses one form of indicator in which a base member is coated with a layer of hygroscopic material substantially over its total surface area. The hygroscopic layer changes from an opaque to a translucent state in the presence of water. At its upper end the layer of hygroscopic material is provided with a discontinuity which effectively prevents moisture travelling up the hygroscopic layer for passage to the atmosphere. The discontinuity acts as a seal along the upper edge. In order to prevent evaporation from the sides of the upper portion of the layer, said upper side edges of the hygroscopic layer are sealed by means of adhesive tape. Accordingly, the upper end of the indicator is sealed on both its upper edge and its side edges. A transparent window is applied over the hygroscopic layer at the upper end of the indicator so that any change in the colour of the hygroscopic material can be observed.

It has been found that the arrangement as described in British Patent No. 2059077 has the disadvantage that because the upper portion is sealed to the atmosphere in order to prevent evaporation of water travelling up the indicator, the indicator can in fact give an incorrect reading. This is due to the fact that the sealing of the upper end of the indicator traps and retains water moisture at said upper end and a favourable reading can be given suggesting that the soil being tested is adequately watered when, in fact, the actual soil surrounding the plant at the lower end of the indicator is dry and requires watering.

An object of the present invention is to provide an indicator of the type disclosed in British Patent 2059077 but in which the aforesaid disadvantage is obviated or mitigated.

U.S. Patent No. 3951098 shows a watering indicator device having a housing structure encapsulating an elongated wick which surrounds but does not touch a layer of moisture-sensitive, colour-changeable material. The housing comprises two peripherally sealed moisture-impervious walls comprising the housing, there being provided vents in said walls.

According to the present invention there is provided a watering indicator for plants or the like comprising a base member adapted to be inserted into a medium to be monitored; a layer of hygroscopic material carried by said base member and adapted to vary in visual character in the presence of water in the medium; viewing means overlying at least a portion of said hygroscopic layer for observing variation in the character thereof and venting means provided to permit loss of water located in the hygroscopic layer between viewing means and the base member, characterised in that said venting means comprises a portion or portions of the hygroscopic layer which extend to all free edges of the viewing means.

Preferably also, the viewing means is provided with a first window area displaying constant colour for enabling ready comparison with a second window area displaying a portion of the hygroscopic layer which is subject to colour variation.

An embodiment of the present invention will now be described by way of example with reference to the accompanying drawing in which:

Fig. 1 is a perspective view of a watering indicator in accordance with the present invention;

Fig. 2 is an exploded perspective view of the indicator; and

Fig. 3 is a side view of the indicator shown in Figs. 1 and 2.

Referring to the drawings, a watering indicator for plants comprises a coloured base strip 4 of synthetic plastics material, the lower end of the strip being pointed to facilitate insertion into the soil.

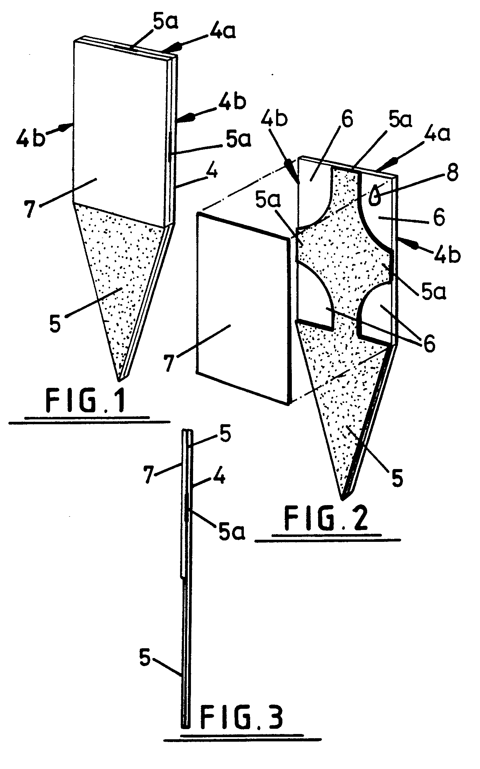

One face of the base strip 4 is coated with a layer 5 of hygroscopic material which, as shown best in Fig. 2, extends continuously from the pointed lower end of the strip 4 to the upper edge 4a of the strip 4 and also laterally to the two side edges 4b of the upper portion of the strip. Those portions 5a of the layer 5 which extend to the upper and side edges 4a and 4b respectively act as vents to allow water travelling up the layer to evaporate to the atmosphere. Discontinuous or discrete areas 6 from which the hygroscopic layer has been removed or omitted are provided towards the upper end of the strip 4 and to these discontinuous areas which are free from hygroscopic material is adhesively secured a transparent viewing window or film 7 of any suitable material e.g. a synthetic plastics material. If desired, the window 7 can be provided with any suitable design. Through the window 7 there can be viewed the hygroscopic layer. A small area 8 of one or more of the areas 6 which are free of hygroscopic material is also left free of adhesive so that the colour of the base strip 4 can be viewed through the window 7 at this location. This permits a ready visual colour comparison between the area 8 and that portion of the hygroscopic layer 6 which is viewed through window 7 and which will, of course, change its character e.g. colour, dependent upon whether the layer 5 is wet or dry.

In operation of the indicator, the lower pointed end is inserted into the soil or other growing medium to be tested so that the lower part of the hygroscopic layer 5 is in contact with the soil. If water is present, water travels upwardly through the layer 5 by capillary action and the hygroscopic material changes from an opaque whitish colour to a translucent form which allows the colour of the base strip to be viewed through the window 7 as the water travels up the indicator. Due to the fact that the hygroscopic layer 5 extends continuously to the upper and side edges of the indicator and thereby allowing evaporation through vents 5a, the indicator gives a true indication that water is present in the soil and not as a result of residual water being retained in the indicator itself.

Any suitable hygroscopic material can be employed for the purposes of the present invention. One such suitable hygroscopic material is calcium hydroxide in a liquid carrier. Examples of other hygroscopic materials which may be used are magnesium hydroxide, calcium carbonate and paper.

## Claims

1. A watering indicator for plants or the like comprising base member (4) adapted to be inserted into a medium to be monitored; a layer (5) of hygroscopic material carried by said base member (4) and adapted to vary in visual character in the presence of water in the medium; viewing means (7) overlying at least a portion of said hygroscopic layer (5) for observing variation in the character thereof and venting means (5a) provided to permit loss of water located in the hygroscopic layer (5) between the viewing means (7) and the base member (4), characterised in that said venting means comprises a portion or portions (5a) of the hygroscopic layer which extend to all free edges of the viewing means (7).

2. A watering indicator as claimed in claim 1 characterised in that the viewing means (7) is provided with a first window area (8) displaying constant colour for enabling ready comparison with a second window area displaying a portion of the hygroscopic layer which is subject to colour variation.

3. A watering indicator as claimed in claim 1, characterised in that the hygroscopic material comprises calcium hydroxide.

4. A watering indicator as claimed in any preceding claim, characterised in that the viewing means (7) comprises a sheet of transparent material secured at discrete locations to the base member (4).

## Patentansprüche

1. Bewässerungsanzeiger für pflanzen oder dergleichen, mit einem Grundelement (4), das zum Einsetzen in ein zu kontrollierendes Medium ausgebildet ist, einer von diesem Grundelement (4) getragenen Schicht (5) eines hygroskopischen Materials, das so eingerichtet ist, daß es in Gegenwart von Wasser in dem Medium ein sichtbares Merkmal ändert, Beobachtungsmittel (7), die mindestens einen Teil der hygroskopischen Schicht (5) überlagert, um eine Veränderung in deren Eigenschaften zu beobachten, sowie Belüftungsmittel (5a), um damit die Abgabe von Wasser zu ermöglichen, das sich in der hygroskopischen Schicht (5) zwischen den Beobachtungsmitteln (7) und dem Grundelement (4) befindet, dadurch gekennzeichnet, daß die Belüftungsmittel einen Abschnitt oder Abschnitte (5a) der hygroskopischen Schicht umfassen, die sich zu allen freien Rändern der Beobachtungsmittel (7) erstrecken.

2. Bewässerungsanzeiger nach Anspruch 1, dadurch gekennzeichnet, daß die Beobachtungsmittel (7) eine erste Fensterfläche (8) aufweist, die eine konstante Farbe anzeigt, um einen leichten Vergleich mit einer zweiten Fensterfläche zu erlauben, die einen Bereich der hygroskopischen Schicht zeigt, der einer Farbänderung unterliegt.

3. Bewässerungsanzeiger nach Anspruch 1, dadurch gekennzeichnet, daß das hygroskopische Material Calciumhydroxid enthält.

4. Bewässerungsanzeiger nach einem der vorstehenden Ansprüche, dadurch gekennzeichnet, daß die Beobachtungsmittel (7) ein transparentes Flächenmaterial aufweisen, das an bestimmten Stellen an dem Grundelement (4) befestigt ist.

## Revendications

1. Indicateur d'arrosage pour plantes ou analogues, comprenant un élément de base (4), adapté pour être inséré dans un milieu à contrôler, une couche (5) de matériau hygroscopique supportée par ledit élément de base (4) et adaptée pour changer d'état visuel en présence d'eau dans le milieu, un moyen de visualisation (7) recouvrant au moins une partie de ladite couche hygroscopique (5) pour observer le changement d'état de celle-ci et des moyens d'évacuation (5a) destinés à permettre l'élimination de l'eau située dans la couche hygroscopique (5) entre le moyen de visualisation (7) et l'élément de base (4), caractérisé en ce que lesdits moyens d'évacuation comprennent une ou plusieurs parties (5a) de la couche hygroscopique, qui s'étendent à tous les bords libres du moyen de visualisation (7).

2. Indicateur d'arrosage selon la revendication 1, caractérisé en ce que le moyen de visualisation (7) est pourvu d'une première surface de fenêtre (8) affichant une couleur constante pour permettre une comparaison immédiate avec une seconde surface de fenêtre affichant une partie de la couche hygroscopique qui est sujette à une modification de couleurs.

3. Indicateur d'arrosage selon la revendication 1, caractérisé en ce que le matériau hygroscopique comprend de l'hydroxyde de calcium.

4. Indicateur d'arrosage selon l'une quelconque des revendications précédentes, caractérisé en ce que le moyen de visualisation (7) comprend une feuille de matériau transparent protégée à des emplacements discrets visà-vis de l'élément de base (4).

FIG.1

FIG.2

FIG.3